# DEMANDE DE BREVET EUROPEEN

(11) **EP 4 640 299 A1**
(43) Date de publication de la demande: **29.10.2025**
(21) Numéro de dépôt: 25165867.0
(22) Date de dépôt: 25.03.2025
(51) Int. Cl.: B01D 53/22, C10L 3/10

(54) **INSTALLATION ET PROCÉDÉ DE TRAITEMENT DE BIOGAZ**

(30) Priorité: 25.04.2024 FR 2404331
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: SALIOU, Karolien, 38360 SASSENAGE (FR); VALENTIN, Solène, 38360 SASSENAGE (FR); LOEB, Romain, 38360 SASSENAGE (FR)
(74) Mandataire: Air Liquide

(57) **Abrégé**

Installation (1) de traitement d'un courant gazeux (10), notamment de biogaz, comprenant du méthane et du dioxyde de carbone, l'installation (1) comprenant une première source froide (6) et un circuit de gaz pour le courant gazeux (10), le circuit de gaz comprenant, disposés en série et reliés fluidiquement par un ensemble de conduites, un premier compresseur (2), une première unité d'épuration (3) configurée pour produire un premier courant gazeux enrichi en méthane (11) avec moins de 5% de dioxyde de carbone, et un courant gazeux enrichi en dioxyde de carbone (12), un premier système d'échange de chaleur (4, 5), et une deuxième unité d'épuration (7) configurée pour produire un deuxième courant gazeux enrichi en méthane (13) avec moins de 400 ppm de dioxyde de carbone, et un courant gazeux appauvri en méthane (14).

## Description

La présente invention est relative à une installation et un procédé de production de méthane purifié à partir de biogaz. Le biogaz est le gaz produit lors de la dégradation de matières organiques en l'absence d'oxygène (fermentation anaérobie), encore appelée méthanisation. Il peut s'agir d'une dégradation naturelle que l'on observe dans les marais ou les décharges d'ordures ménagères. La production de biogaz peut aussi résulter de la méthanisation de déchets dans un réacteur dédié, et dont les conditions sont contrôlées. Ce réacteur est appelé méthaniseur ou digesteur, puis dans un post-digesteur, similaire au digesteur et permettant de poursuivre et éventuellement compléter la réaction de méthanisation. On appelle biomasse tout groupement de matières organiques pouvant se transformer en énergie à travers ce processus de méthanisation, par exemple boues de station d'épuration, fumiers/lisiers, résidus agricoles, et déchets alimentaires.

Le biogaz contient majoritairement du méthane (CH4) et du dioxyde de carbone (CO2) dans des proportions variables en fonction du mode d'obtention et du substrat, mais peut également contenir, en moindres proportions, de l'eau, de l'azote, de l'hydrogène sulfuré (H2S), de l'oxygène, ainsi que des composés organiques autres, à l'état de traces, dont le H2S, entre 10 et 50,000 ppmv. Selon les matières organiques dégradées et les techniques utilisées, les proportions des composants diffèrent, mais en moyenne le biogaz comporte (en mole ou en volume) sur gaz sec, de 30 à 75% de méthane, de 15 à 60% de dioxyde de carbone, de 0 à 15% d'azote, de 0 à 5% d'oxygène et des composés sous forme de traces.

Une purification plus affinée du biogaz permet sa plus large utilisation, en particulier, une purification affinée du biogaz permet d'obtenir un biogaz épuré aux spécifications du gaz naturel et qui pourra lui être substitué. Le biogaz ainsi purifié est appelé « biométhane **».** Le biométhane complète ainsi les ressources de gaz naturel avec une partie renouvelable produite au cœur des territoires; il est utilisable pour exactement les mêmes usages que le gaz naturel d'origine fossile. Il peut alimenter un réseau de gaz naturel, une station de remplissage pour véhicules. Dans certaines conditions, il peut aussi être liquéfié pour être stocké sous forme de gaz naturel liquide (bio-GNL).

Les installations de liquéfaction pour produire du bio-GNL nécessitent, en entrée, un méthane suffisamment pur pour éviter notamment de solidifier les impuretés et boucher les conduites ou les échangeurs de chaleur utilisés par le procédé. L'impureté principale est le CO2, dont la teneur doit être inférieure à 400 ppm afin d'assurer le bon déroulement du procédé de liquéfaction. Pour produire du méthane purifié à la qualité nécessaire requise pour sa liquéfaction, c'est-à-dire un méthane ayant entre 0 et 400 ppm de CO2, en particulier entre 50 et 400 ppm de CO2, à partir de sources de biogaz, la solution traditionnelle est d'enchaîner deux étapes de purification.

Lors d'une première étape dite d'« épuration » (« upgrading » en anglais) le biogaz brut est généralement épuré en biométhane jusqu'à un taux de CO2 de 2 à 4 mol%. Cette étape est mise en œuvre par des unités de séparation membranaire ou de lavage aux amines.

Lors d'une deuxième étape dite d'« abattement fin » (« polishing » en anglais), des unités de lavage aux amines ou d'adsorption de type PTSA, PSA ou TSA sont couramment utilisées pour obtenir une teneur en CO2 comprise entre 50 et 400 ppm, à partir du flux de méthane comprenant 2 à 4 mol% CO2 qui leur est fourni en entrée.

La demande WO2016/034788 A1 décrit une alternative possible pour la mise en oeuvre de l'étape d'épuration ou upgrading.

L'invention concerne notamment une installation de traitement d'un courant gazeux, notamment de biogaz, comprenant du méthane et du dioxyde de carbone, l'installation comprenant une première source froide et un circuit de gaz pour le courant gazeux, le circuit de gaz comprenant, disposés en série et reliés fluidiquement par un ensemble de conduites, un premier compresseur, une première unité d'épuration configurée pour produire un premier courant gazeux enrichi en méthane et un courant gazeux enrichi en dioxyde de carbone, un premier système d'échange de chaleur, et une deuxième unité d'épuration configurée pour produire un deuxième courant gazeux enrichi en méthane et un courant gazeux appauvri en méthane, l'ensemble de conduites étant configuré pour transférer le courant gazeux comprimé par le premier compresseur à une entrée de la première unité d'épuration, transférer le courant gazeux enrichi en méthane d'une première sortie de la première unité d'épuration à une première entrée de la deuxième unité d'épuration, et transférer le courant gazeux appauvri en méthane d'une première sortie de la deuxième unité d'épuration à une entrée du compresseur, le premier système d'échange de chaleur étant configuré pour mettre en échange thermique la source froide et le premier courant gazeux enrichi en méthane afin de refroidir le premier courant gazeux enrichi en méthane.

Ces solutions ne sont pas optimisées du point de vue énergétique, ne prennent pas en compte la gestion ni la valorisation du CO2 produit et ne sont donc pas adaptées aux nouveaux enjeux. Ces solutions présentent notamment les inconvénients suivants.

Les lavages aux amines utilisés pour l'étape d'abattement fin ou polishing sont des systèmes peu efficaces énergétiquement, qui contiennent des substances chimiques nocives et requièrent une température élevée.

Le polishing par adsorption est un système séquentiel cyclique qui nécessite des phases de régénération et l'utilisation d'un gaz de régénération pour désorber le CO2 capturé ; l'opération est donc discontinue et consomme souvent une quantité non négligeable de biométhane purifié pour les phases de régénération.

Les systèmes d'adsorption possèdent de nombreuses parties en mouvements et nécessitent une régulation fine des cycles.

Ces installations représentent un coût d'opération élevé.

L'intégration du procédé d'épuration avec les procédés de liquéfaction n'est pas prise en compte.

Un but de la présente invention est de proposer une installation et un procédé innovants de production de méthane purifié, de liquéfaction du méthane purifié et de valorisation du dioxyde de carbone, et ainsi de pallier tout ou partie des inconvénients relevés ci-dessus.

A cette fin, l'invention, conformément à la définition générique donnée ci-dessus, est caractérisée en ce que la première unité d'épuration est configurée pour produire le premier courant gazeux enrichi en méthane avec moins de 5% de dioxyde de carbone, et en ce que la deuxième unité d'épuration comprend une unité de séparation membranaire configurée pour produire le deuxième courant gazeux enrichi en méthane avec moins de 400 ppm de dioxyde de carbone.

L'invention permet ainsi une mise en œuvre simple et efficace de l'étape de polishing.

L'invention peut être avantageusement appliquée au traitement de courants gazeux d'origine biologique (biogaz), fossile (par exemple du gaz naturel), ou produits à partir de déchets ou ordures, notamment au sein ou à proximité des sites d'enfouissement (landfill gas).

Selon d'autres aspects, les modes de réalisation de l'installation selon l'invention peuvent comporter l'une ou plusieurs des caractéristiques suivantes.

Selon une réalisation, la deuxième unité d'épuration consiste en un étage de séparation membranaire, notamment configuré pour produire le deuxième courant gazeux enrichi en méthane avec moins de 50 ppm de dioxyde de carbone.

Selon une réalisation, le premier système d'échange de chaleur est en outre configuré pour mettre en échange thermique le courant gazeux appauvri en méthane avec le premier courant gazeux enrichi en méthane.

Selon une réalisation, le premier système d'échange de chaleur comprend, en série dans le circuit de gaz, un premier échangeur de chaleur et un deuxième échangeur de chaleur, le premier échangeur de chaleur étant configuré pour mettre en échange thermique le premier courant gazeux enrichi en méthane et le courant gazeux appauvri en méthane, et le deuxième échangeur de chaleur étant configuré pour mettre en échange thermique le premier courant gazeux enrichi en méthane et la source froide.

Selon une réalisation, l'ensemble de conduites comprend une conduite de dérivation configurée pour prélever une fraction du deuxième courant gazeux enrichi en méthane et la transférer à une deuxième entrée de la deuxième unité d'épuration, et en ce que la conduite de dérivation peut comprendre un dispositif de détente.

Selon une réalisation, la première unité d'épuration comprend un premier et un deuxième étage de séparation membranaire en série, et en ce que l'ensemble de conduites comprend une conduite configurée pour relier une sortie du premier étage de séparation membranaire à une entrée du deuxième étage de séparation membranaire, l'installation comprenant un deuxième système d'échange de chaleur configuré pour mettre en échange thermique au moins une portion de la conduite avec la source froide.

Selon une réalisation, l'installation comprend une colonne de distillation et en ce que l'ensemble de conduites est configuré pour transférer le courant gazeux enrichi en dioxyde de carbone d'une deuxième sortie de la première unité d'épuration à une entrée de la colonne de distillation afin de produire du dioxyde de carbone liquéfié.

Selon une réalisation, l'ensemble de conduites comprend une conduite reliant une première sortie supérieure de la colonne de distillation à l'entrée de la première unité d'épuration pour transférer au moins une fraction d'un courant gazeux de tête de la colonne de distillation à la première unité d'épuration.

Selon une réalisation, l'installation comprend un troisième système d'échange de chaleur configuré pour refroidir le courant gazeux de tête de la colonne de distillation.

Selon une réalisation, l'installation comprend un dispositif de liquéfaction et en ce que l'ensemble de conduites est configuré pour transférer le deuxième courant gazeux enrichi en méthane de la deuxième unité d'épuration à une entrée du dispositif de liquéfaction afin de liquéfier le deuxième courant gazeux enrichi en méthane.

Selon une réalisation, l'installation comprend un quatrième système d'échange de chaleur configuré pour refroidir le deuxième courant gazeux enrichi en méthane avant son entrée dans le dispositif de liquéfaction.

Selon une réalisation, deux au moins des premier, deuxième, troisième et quatrième systèmes d'échange de chaleur sont en échange thermique avec la même source froide.

L'invention concerne en outre un procédé de traitement d'un courant gazeux, notamment de biogaz, comprenant du méthane et du dioxyde de carbone, le procédé comprenant les étapes suivantes.

Comprimer le courant gazeux à une pression comprise entre 1 et 22 barg, de préférence entre 7 et 20 barg, de préférence entre 12 et 16 barg.

Séparer le courant gazeux comprimé en un premier courant gazeux enrichi en méthane et un courant gazeux enrichi en dioxyde de carbone.

Refroidir le premier courant gazeux enrichi en méthane à une température comprise entre -10 et -50 °C, de préférence entre -20 et -30 °C.

Séparer le premier courant gazeux enrichi en méthane en un deuxième courant gazeux enrichi en méthane et un courant gazeux appauvri en méthane.

Le premier courant gazeux enrichi en méthane contient moins de 3% de dioxyde de carbone, et le deuxième courant gazeux enrichi en méthane contient moins de 400 ppm de dioxyde de carbone, de préférence moins de 50 ppm de dioxyde de carbone.

Selon d'autres aspects, les modes de réalisation du procédé selon l'invention peuvent comporter l'une ou plusieurs des caractéristiques suivantes.

Selon une réalisation, le procédé comprend une étape supplémentaire de mettre en échange thermique le courant gazeux appauvri en méthane avec le premier courant gazeux enrichi en méthane.

Selon une réalisation, l'étape de séparer le premier courant gazeux enrichi en méthane est réalisée par une unité de séparation membranaire, et le procédé comprend les étapes supplémentaires suivantes.

Prélever une fraction du deuxième courant gazeux enrichi en méthane,

Détendre la fraction du deuxième courant gazeux enrichi en méthane,

Injecter la fraction du deuxième courant gazeux enrichi en méthane dans l'unité de séparation membranaire.

Selon une réalisation, le procédé comprend au moins l'une des étapes supplémentaires suivantes : liquéfier le courant gazeux enrichi en dioxyde de carbone, et/ou liquéfier le deuxième courant gazeux enrichi en méthane.

L'invention peut encore concerner tout dispositif ou procédé alternatif comprenant toute combinaison des caractéristiques ci-dessus ou ci-dessous, notamment dans le cadre des revendications.

L'invention peut encore concerner tout dispositif ou procédé alternatif comprenant toute combinaison des caractéristiques ci-dessus ou ci-dessous, notamment dans le cadre des revendications.

D'autres particularités et avantages apparaîtront à la lecture de la description ci-après, faite en référence aux figures suivantes.

[Fig. 1] La figure 1 représente une vue schématique et partielle, illustrant un premier exemple de réalisation possible de l'invention.

[Fig. 2] La figure 2 représente une vue schématique et partielle, illustrant un deuxième exemple de réalisation possible de l'invention.

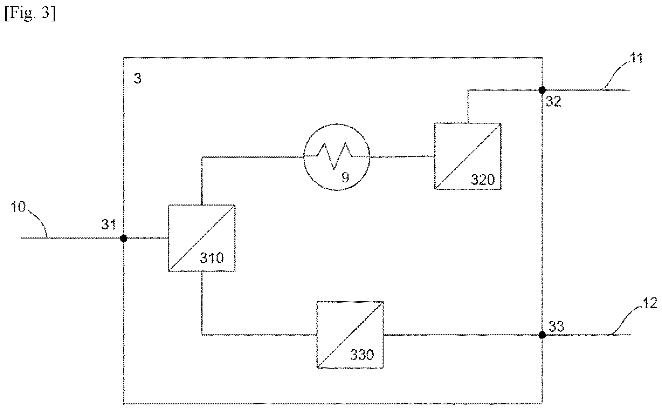

[Fig. 3] La figure 3 représente une vue schématique et partielle, illustrant un détail d'un troisième exemple de réalisation possible de l'invention.

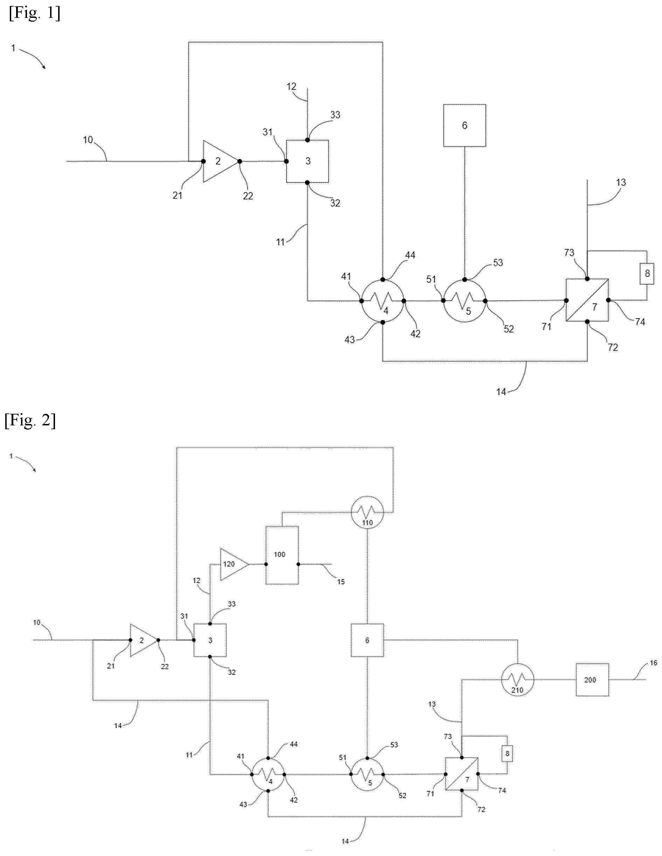

L'installation 1 illustrée à titre d'exemple à la figure 1 permet le traitement d'un courant gazeux 10 comprenant du méthane et du dioxyde de carbone. Ce courant gazeux 10 est notamment d'origine biologique, par exemple du biogaz. De préférence ce courant gazeux 10 a au préalable été séché, et épuré du H2S et de composés organiques volatiles (VOC).

L'installation 1 comprend une première source froide 6 et un circuit de gaz pour le courant gazeux 10. Le circuit de gaz comprend, disposés en série et reliés fluidiquement par un ensemble de conduites, un premier compresseur 2, une première unité d'épuration 3, un premier système d'échange de chaleur 4, 5, et une deuxième unité d'épuration 7.

La première unité d'épuration 3 est configurée pour produire un premier courant gazeux enrichi en méthane 11 et un courant gazeux enrichi en dioxyde de carbone 12. La première unité d'épuration 3 est configurée pour produire le premier courant gazeux enrichi en méthane 11 avec moins de 5% de dioxyde de carbone, par exemple moins de 3% de dioxyde de carbone. Le premier courant gazeux enrichi en méthane 11 comprend par exemple plus de 96% de méthane. Le courant gazeux enrichi en dioxyde de carbone 12 comprend par exemple plus de 80% de dioxyde de carbone. La première unité d'épuration 3 permet ainsi de mettre en oeuvre l'étape d'upgrading.

Par exemple, la configuration de l'unité d'épuration 3 pour produire le premier courant gazeux enrichi en méthane 11 avec une teneur maximale de dioxyde de carbone est obtenue en utilisant un épurateur dimensionné pour atteindre ce niveau d'épuration.

L'unité d'épuration 3 peut être une unité de traitement par perméation membranaire comprenant une ou plusieurs unités de séparation par membrane. Ces membranes sont plus perméables au dioxyde de carbone qu'au méthane. On peut par exemple utiliser des membranes de type tubulaire et/ou en polyimide. Chaque unité de séparation par membrane (également appelée « étage ») peut comprendre une ou plusieurs membranes connectées en parallèle. Plusieurs étages de membrane (typiquement entre 2 et 4) sont nécessaires pour atteindre une teneur en CO2 du premier courant gazeux enrichi en méthane 11 inférieure à 5 % ou inférieure à 3 %. La variation, respectivement la réduction ou l'augmentation, du nombre d'étages ou de la quantité de membranes effectivement utilisés permet de faire varier, respectivement d'augmenter ou de réduire la teneur en CO2.

La deuxième unité d'épuration 7 est configurée pour produire un deuxième courant gazeux enrichi en méthane 13 et un courant gazeux appauvri en méthane 14. La deuxième unité d'épuration 7 comprend une unité de séparation membranaire 7. Les membranes utilisées sont plus perméables au dioxyde de carbone qu'au méthane. On peut par exemple utiliser des membranes de type tubulaire et/ou en polyimide.

La deuxième unité de séparation membranaire est configurée pour produire le deuxième courant gazeux enrichi en méthane 13 avec moins de 400 ppm de dioxyde de carbone, de préférence moins de 50 ppm de dioxyde de carbone. Le deuxième courant gazeux enrichi en méthane 13 comprend par exemple plus de 99,9 % de méthane. Le courant gazeux appauvri en méthane 14 comprend par exemple moins de 95 % de méthane, par exemple entre 80 % et 95 % de méthane. La deuxième unité d'épuration 7 permet ainsi de mettre en oeuvre l'étape de polishing.

La deuxième unité d'épuration 7 peut comprendre un ou plusieurs étages de séparation membranaire configurables de manière à utiliser, en fonction du débit de gaz à épurer et de la pureté recherchée, entre 50 % et 100% de la capacité membranaire des étages. C'est-à-dire que chaque étage présente une capacité membranaire maximale déterminée et que un ou plusieurs des étages de séparation membranaire peuvent être configurés en temps réel pour utiliser une portion variable de leur capacité membranaire. On entend par capacité membranaire la surface membranaire en contact avec le courant de gaz à purifier.

Par exemple, la configuration de la deuxième unité d'épuration 7 pour produire le deuxième courant gazeux enrichi en méthane 13 est obtenue en utilisant un épurateur dimensionné pour atteindre ce niveau d'épuration.

Dans le cas où le premier courant gazeux enrichi en méthane 11, entrant dans la deuxième unité d'épuration 7, présente un débit d'environ 1000 Nm3/h et une teneur en CO2 inférieure à 3 %, la deuxième unité d'épuration 7 comprendra cinquante membranes afin d'obtenir un deuxième courant gazeux enrichi en méthane 13 avec une concentration en CO2 comprise entre 0 et 400 ppm, notamment 50 ppm. La deuxième unité d'épuration 7 peut être opérée entre 8 et 12 barg et entre - 40 et -20°C, de préférence -20°C ; c'est-à-dire que le deuxième courant gazeux enrichi en méthane 13 pénètre dans la deuxième unité d'épuration 7 à une pression comprise entre 8 barg et 12 barg et à une température comprise entre -40 °C et -20°C, de préférence -20°C.

L'ensemble de conduites est configuré pour transférer le courant gazeux 10 comprimé par le premier compresseur 2 à une entrée 31 de la première unité d'épuration 3, transférer le courant gazeux enrichi en méthane 11 d'une première sortie 32 de la première unité d'épuration 3 à une première entrée 71 de la deuxième unité d'épuration 7, et transférer le courant gazeux appauvri en méthane 14 d'une première sortie 72 de la deuxième unité d'épuration 7 à une entrée 21 du compresseur 2. On récupère ainsi le méthane qui n'a pas été retenu par la deuxième unité d'épuration 7. La production de méthane purifié est optimisée.

En opération, le courant gazeux 10 est comprimé par le compresseur 2 à une pression comprise entre 1 et 22 barg, de préférence entre 7 et 20 barg, encore plus de préférence entre 12 et 16 barg. La première unité d'épuration 3 met en oeuvre l'étape d'upgrading et sépare le courant gazeux 10 en le premier courant gazeux enrichi en méthane 11 et le courant gazeux enrichi en dioxyde de carbone 12. Le premier courant gazeux enrichi en méthane 11 contient moins de 3% de dioxyde de carbone et est ensuite refroidi à une température comprise entre -10 et -50 °C, de préférence entre -20 et -30 °C, encore plus de préférence -20 °C.

Le courant gazeux enrichi en dioxyde de carbone 12 est récupéré à une deuxième sortie 33 de la première unité d'épuration 3 et peut être mis à l'évent ou utilisé de manière connue, ou encore liquéfié comme illustré par la suite.

La deuxième unité d'épuration 7 met en oeuvre l'étape de polishing et sépare le premier courant gazeux enrichi en méthane 11 en le deuxième courant gazeux enrichi en méthane 13 et le courant gazeux appauvri en méthane 14. Le deuxième courant gazeux enrichi en méthane 13 contient alors moins de 400 ppm de dioxyde de carbone, et de préférence moins de 50 ppm de dioxyde de carbone.

Le deuxième courant gazeux enrichi en méthane 13 est récupéré à une deuxième sortie 73 de la deuxième unité d'épuration 7 et peut être utilisé ou vendu directement de manière connue, ou encore liquéfié comme illustré par la suite.

Le premier système d'échange de chaleur 4, 5 est configuré pour mettre en échange thermique la source froide 6 et le premier courant gazeux enrichi en méthane 11 afin de refroidir le premier courant gazeux enrichi en méthane 11.

La source froide 6 est notamment configurée pour fournir de la puissance froide à une température comprise entre -50 °C et -10 °C, de préférence entre -45 et -20 °C, de préférence entre -30 °C et -20 °C, typiquement à -20 °C. Le premier courant gazeux enrichi en méthane 11 entre donc dans la deuxième unité d'épuration 7 à une température déterminée par la source froide 6.

La source froide 6 peut comprendre un réfrigérateur mécanique et/ou à cycle de réfrigération, par exemple une réserve de fluide froid. L'échange de chaleur entre la source froide et le courant gazeux peut avoir lieu directement dans le système d'échange et/ou via un fluide ou matériaux caloporteur intermédiaire.

De manière surprenante, les inventeurs ont observé que le refroidissement d'un courant gazeux de méthane déjà purifié à la qualité suffisante pour, par exemple, être injecté dans un réseau de gaz naturel, et le traitement subséquent par une unité de séparation membranaire permettent d'obtenir un courant gazeux de méthane beaucoup plus pur que ce que les systèmes membranaires connus permettent d'obtenir.

Dans un mode de réalisation, la deuxième unité d'épuration 7 peut être formée de ou consister en un étage de séparation membranaire configuré pour produire le deuxième courant gazeux enrichi en méthane 13 avec moins de 400 ppm de dioxyde de carbone, de préférence avec moins de 50 ppm de dioxyde de carbone. Un unique étage de séparation membranaire peut ainsi suffire pour le polishing du biométhane. L'installation est simplifiée et les coûts d'opérations peuvent être réduits.

Dans un mode de réalisation, la deuxième unité d'épuration 7 peut comprendre deux étages de séparation membranaire ou un seul étage de séparation membranaire divisé en deux sous-étages. L'obtention d'un deuxième courant enrichi en méthane 13 avec moins de 50 ppm de CO2 est facilitée.

La division d'un étage membranaire en deux sous-étages, appelée aussi « split staging » en anglais, consiste à répartir les membranes de l'étage membranaire en deux groupes ou sous-étages connectés en série. Par exemple, un étage membranaire comprenant quatre membranes en parallèle peut être remplacé par un premier sous-étage comprenant deux membranes en parallèle et connecté en série à un deuxième sous-étage comprenant deux membranes en parallèle. Les courants gazeux riches en méthane produits par les membranes du premier sous-étage sont recombinés pour entrer dans le deuxième sous-étage. Ainsi, chaque sous-étage peut opérer à une sélectivité plus faible, tout en obtenant une meilleure productivité et une concentration en CO2 plus faible dans le courant gazeux enrichi en méthane sortant de l'étage membranaire.

Dans un mode de réalisation, le premier système d'échange de chaleur 4, 5 peut être configuré pour mettre en échange thermique le courant gazeux appauvri en méthane 14 avec le premier courant gazeux enrichi en méthane 11. Le courant gazeux appauvri en méthane 14 se réchauffe et refroidit ainsi le premier courant gazeux enrichi en méthane 11 à une température comprise entre -40 °C et -10 °C, de préférence - 20 °C. Les frigories du courant gazeux appauvri en méthane 14 sont récupérées. L'efficacité énergétique de l'installation 1 est améliorée.

Dans un mode de réalisation, le premier système d'échange de chaleur peut comprendre, en série dans le circuit de gaz, un premier échangeur de chaleur 4 et un deuxième échangeur de chaleur 5. Le premier échangeur de chaleur 4 est configuré pour mettre en échange thermique le premier courant gazeux enrichi en méthane 11 et le courant gazeux appauvri en méthane 14. Le deuxième échangeur de chaleur 5 est configuré pour mettre en échange thermique le premier courant gazeux enrichi en méthane 11 et la source froide 6.

Le premier échangeur 4 et le deuxième échangeur 5 sont de préférence distincts. Ceci permet de réduire la taille de ces équipements. L'échangeur 4 réalise ainsi un pré-refroidissement du courant gazeux enrichi en méthane 11 tout en récupérant les frigories du courant gazeux appauvri en méthane 14, avant de recycler ce dernier à l'entrée 21 du compresseur 2. Le contrôle du fonctionnement du deuxième échangeur peut ainsi être optimisé.

Le premier échangeur 4 et le deuxième échangeur 5 peuvent, en alternative, faire partie d'un seul bloc d'échange thermique. Ce bloc d'échange thermique comprendrait alors plusieurs passages dédiés permettant de réaliser d'abord l'échange thermique entre le premier courant gazeux enrichi en méthane 11 et le courant gazeux appauvri en méthane 14 puis l'échange thermique de ce même premier courant gazeux enrichi en méthane 11 avec la source froide 6. La température du premier courant gazeux enrichi en méthane 11 peut ainsi être régulée via un seul organe.

Le premier système d'échange de chaleur 4, 5 peut par exemple comprendre un unique échangeur de chaleur comprenant trois passages : un passage fluidique pour le premier courant gazeux enrichi en méthane 11, un passage fluidique pour le courant gazeux appauvri en méthane 14 et un passage fluidique pour un fluide caloporteur provenant de la source froide 6. Cet unique échangeur de chaleur est alors configuré pour mettre en échange thermique, dans l'ordre, le premier courant gazeux enrichi en méthane 11 avec le courant gazeux appauvri en méthane 14, puis le premier courant gazeux enrichi en méthane 11 avec le fluide caloporteur.

Dans un mode de réalisation, l'ensemble de conduites comprend une conduite de dérivation configurée pour prélever une fraction du deuxième courant gazeux enrichi en méthane 13 et la transférer à une deuxième entrée 74 de la deuxième unité d'épuration 7. Par exemple, la deuxième sortie 73 de la deuxième unité d'épuration 7 est reliée à une conduite principale de transfert du deuxième courant gazeux enrichi en méthane 13 vers un utilisateur. La conduite de dérivation comprend alors une première extrémité reliée à cette conduite principale et une deuxième extrémité reliée à la deuxième entrée 74 de la deuxième unité d'épuration 7.

La conduite de dérivation peut comprendre un dispositif de détente 8. Le dispositif de détente peut par exemple être une vanne de contrôle associée à un instrument de mesure de la pression du gaz dans la conduite de dérivation en aval du dispositif de détente 8. Le dispositif de détente est de préférence configuré pour abaisser la pression de la fraction prélevée par la conduite de dérivation jusqu'à la pression du courant gazeux appauvri en méthane 14.

En opération, on prélève une fraction, par exemple entre 0 % et 5 %, du deuxième courant gazeux enrichi en méthane 13, on la détend grâce au dispositif de détente 8, et on l'injecte dans l'unité de séparation membranaire 7. Le deuxième courant gazeux enrichi en méthane 13 est par exemple à une pression comprise entre 8 et 14 barg, de préférence 10 barg. Le courant gazeux appauvri en méthane 14 est par exemple à une pression comprise entre 0.5 et 4 barg, de préférence 1 barg. Cette opération, dite aussi flash, permet de refroidir ultérieurement les courants gazeux dans la deuxième unité d'épuration 7.

Dans un mode de réalisation, la première unité d'épuration 3 comprend un premier 310 et un deuxième 320 étage de séparation membranaire en série. L'ensemble de conduites comprend une conduite configurée pour relier une sortie de gaz enrichi en méthane du premier étage 310 de séparation membranaire à une entrée du deuxième étage 320 de séparation membranaire. L'installation comprend un deuxième système d'échange de chaleur 9 configuré pour mettre en échange thermique le gaz enrichi en méthane, sortant du premier étage 310, avec la source froide 6. Le premier étage de séparation membranaire 310 produit ainsi un rétentat riche en méthane et un perméat riche en dioxyde de carbone. Le système d'échange de chaleur 9 permet de refroidir le rétentat à l'aide de la source froide 6. Le rétentat refroidi est ensuite introduit dans le deuxième étage de séparation membranaire 320.

La première unité d'épuration 3 peut comprendre un ou plusieurs étages de séparation membranaire 310, 320, 330 qui sont configurables de manière à utiliser, en fonction du débit de gaz à épurer et de la pureté recherchée, entre 50 % et 100 % de la capacité membranaire des étages. C'est-à-dire que chaque étage présente une capacité membranaire maximale déterminée et que un ou plusieurs des étages de séparation membranaire peuvent être configurés en temps réel pour utiliser une portion variable de leur capacité membranaire. Ainsi le taux de surface membranaire disponible qui est effectivement utilisé peut varier pour s'adapter aux contraintes de production.

Dans un mode de réalisation, la première unité d'épuration 3 comprend une unité de séparation membranaire formée de ou consistant en deux ou trois étages 310, 320, 330 de séparation membranaire.

On peut par exemple obtenir un premier courant gazeux enrichi en méthane 11 avec moins de 3 %, typiquement 2 %, de CO2 en configurant la première unité d'épuration 3 pour qu'elle comprenne trois étages de séparation membranaire. La quantité de membranes par étage va dépendre, entre autres, du débit et de la composition du courant gazeux 10. Pour un débit de biogaz de 1000 Nm3/h avec une teneur en méthane d'environ 50%, la première unité d'épuration 3 peut être configurée avec quatre membranes au premier étage 310, cinq membranes au deuxième étage 320 et quatre membranes au troisième étage 330.

Dans un mode de réalisation, la première unité d'épuration 3 comprend l'un au moins parmi : une unité d'adsorption du dioxyde de carbone, par exemple une PSA/VSA/TSA, ou une unité d'absorption du dioxyde de carbone, par exemple de lavage aux amines.

L'unité d'épuration 3 peut en effet fonctionner selon le principe de la séparation et/ou de l'adsorption et/ou de l'absorption. Il peut s'agir par exemple, d'un système d'adsorption à pression alternée (PSA), de lavage aux amines, de lavage à l'eau, de lavage physique organique, de distillation cryogénique ou de séparation par membrane.

Dans un mode de réalisation, l'installation comprend une colonne de distillation 100 et l'ensemble de conduites est configuré pour transférer le courant gazeux enrichi en dioxyde de carbone 12 d'une deuxième sortie 33 de la première unité d'épuration 3 à une entrée de la colonne de distillation 100 afin de produire du dioxyde de carbone liquéfié. Le courant gazeux enrichi en dioxyde de carbone 12 est de préférence comprimé jusqu'à une pression comprise entre 1 barg et 3 barg, de préférence 1,5 barg, dans un compresseur 120 avant d'entrer dans la colonne de distillation. Les colonnes de distillation adaptées à cette fin sont connues et ne seront pas décrites ici plus en détail.

En opération, entre 80 % et 95 %, typiquement 90 %, du CO2 contenu dans le courant gazeux enrichi en dioxyde de carbone 12 est liquéfiée.

Dans un mode de réalisation, l'ensemble de conduites comprend une conduite reliant une première sortie supérieure de la colonne de distillation 100 à l'entrée 31 de la première unité d'épuration 3 pour transférer au moins une fraction d'un courant gazeux de tête de la colonne de distillation 100 à la première unité d'épuration 3. Le courant gazeux de tête contient typiquement entre 20 % et 40 % de méthane, qui est ainsi recyclé dans le système d'épuration et récupéré. La production de méthane de l'installation est optimisée.

Dans un mode de réalisation, l'installation comprend un troisième système d'échange de chaleur 110 configuré pour refroidir le courant gazeux de tête de la colonne de distillation 100 avant le recyclage du courant gazeux de tête dans la première unité d'épuration 3.

Dans un mode de réalisation, l'installation comprend un dispositif de liquéfaction 200 et l'ensemble de conduites est configuré pour transférer le deuxième courant gazeux enrichi en méthane 13 de la deuxième unité d'épuration 7 à une entrée du dispositif de liquéfaction 200 afin de liquéfier le deuxième courant gazeux enrichi en méthane 13. Des dispositifs adaptés à la liquéfaction du méthane sont connus et ne seront pas décrits ici plus en détail.

En opération, plus de 95 %, de préférence la totalité, du CH4 contenu dans le deuxième courant gazeux enrichi en méthane 13 est liquéfiée.

Dans un mode de réalisation, l'installation comprend un quatrième système d'échange de chaleur 210 configuré pour refroidir le deuxième courant gazeux enrichi en méthane 13 avant sont entrée dans le dispositif de liquéfaction 200. De cette manière la puissance de refroidissement fournie par le dispositif de liquéfaction est optimisée.

Dans un mode de réalisation, deux au moins des premier 4, 5, deuxième 9, troisième 110 et quatrième 210 systèmes d'échange de chaleur sont en échange thermique avec la même source froide 6. L'installation peut ainsi mutualiser une source froide pour plusieurs besoins en froid distincts. Les coûts de réalisation et d'opération de l'installation peuvent être optimisés.

La figure 2 montre un exemple où l'installation comprend des unités de séparation membranaire 3, 7, une colonne de distillation 100 et un dispositif de liquéfaction de méthane 200. Dans cet exemple, une seule source froide 6 fournit la puissance froide nécessaire aux premier 5, deuxième 110 et troisième 210 systèmes d'échange de chaleur.

Dans un mode de réalisation, au moins une partie des conduites de l'installation comprend une isolation thermique. L'isolation thermique peut par exemple comprendre ou être formée de perlite, mousse ou autres matériaux adaptés. L'isolation thermique peut être sous vide. L'isolation thermique peut par exemple être assurée par un espace sous vide autour de la conduite principale empêchant ou réduisant les échanges thermiques entre l'extérieur et le flux gazeux à l'intérieur de la conduite.

Dans un mode de réalisation, l'installation comprend une source de méthane pur, par exemple une bouteille de méthane gazeux ou liquéfié, et le procédé comprend une étape de démarrage de l'installation lors de laquelle du méthane provenant de la source de méthane pur est mis en circulation dans la deuxième unité d'épuration 7.

Alternativement, lors du démarrage du procédé, le deuxième courant gazeux enrichi en méthane 13, qui n'est pas encore suffisamment pur pour être liquéfié, est recyclé en amont jusqu'à ce que ce courant 13 atteigne une teneur en CO2 suffisamment faible pour être liquéfié, notamment une teneur en CO2 comprise entre 0 et 400 ppm, de préférence inférieure à 50 ppm. De préférence, si l'installation comprend un digesteur, le deuxième courant enrichi en méthane 13 est injecté dans le digesteur. Cette phase de démarrage peut avoir une durée variable et peut notamment durer environ 15 minutes.

## Revendications

1. Installation (1) de traitement d'un courant gazeux (10), notamment de biogaz, comprenant du méthane et du dioxyde de carbone, l'installation (1) comprenant une première source froide (6) et un circuit de gaz pour le courant gazeux (10), le circuit de gaz comprenant, disposés en série et reliés fluidiquement par un ensemble de conduites, un premier compresseur (2), une première unité d'épuration (3) configurée pour produire un premier courant gazeux enrichi en méthane (11) et un courant gazeux enrichi en dioxyde de carbone (12), un premier système d'échange de chaleur (4, 5), et une deuxième unité d'épuration (7) configurée pour produire un deuxième courant gazeux enrichi en méthane (13) et un courant gazeux appauvri en méthane (14), l'ensemble de conduites étant configuré pour
- transférer le courant gazeux (10) comprimé par le premier compresseur (2) à une entrée (31) de la première unité d'épuration (3),
- transférer le courant gazeux enrichi en méthane (11) d'une première sortie (32) de la première unité d'épuration (3) à une première entrée (71) de la deuxième unité d'épuration (7), et
- transférer le courant gazeux appauvri en méthane (14) d'une première sortie (72) de la deuxième unité d'épuration (7) à une entrée (21) du compresseur (2),
le premier système d'échange de chaleur (4, 5) étant configuré pour mettre en échange thermique la source froide (6) et le premier courant gazeux enrichi en méthane (11) afin de refroidir le premier courant gazeux enrichi en méthane, **caractérisée en ce que** la première unité d'épuration (3) est configurée pour produire le premier courant gazeux enrichi en méthane (11) avec moins de 5% de dioxyde de carbone, et **en ce que** la deuxième unité d'épuration (7) comprend une unité de séparation membranaire (7) configurée pour produire le deuxième courant gazeux enrichi en méthane (13) avec moins de 400 ppm de dioxyde de carbone.

2. Installation (1) selon la revendication 1, **caractérisée en ce que** la deuxième unité d'épuration (7) consiste en un étage de séparation membranaire, notamment configuré pour produire le deuxième courant gazeux enrichi en méthane (13) avec moins de 50 ppm de dioxyde de carbone.

3. Installation (1) selon l'une quelconque des revendications 1 ou 2, **caractérisée en ce que** le premier système d'échange de chaleur (4, 5) est en outre configuré pour mettre en échange thermique le courant gazeux appauvri en méthane (14) avec le premier courant gazeux enrichi en méthane (11).

4. Installation (1) selon l'une quelconque des revendications 1 à 3, **caractérisée en ce que** le premier système d'échange de chaleur (4, 5) comprend, en série dans le circuit de gaz, un premier échangeur de chaleur (4) et un deuxième échangeur de chaleur (5),
- le premier échangeur de chaleur (4) étant configuré pour mettre en échange thermique le premier courant gazeux enrichi en méthane (11) et le courant gazeux appauvri en méthane (14), et
- le deuxième échangeur de chaleur (5) étant configuré pour mettre en échange thermique le premier courant gazeux enrichi en méthane (11) et la source froide (6).

5. Installation (1) selon l'une quelconque des revendications 1 à 4, **caractérisée en ce que** l'ensemble de conduites comprend une conduite de dérivation configurée pour prélever une fraction du deuxième courant gazeux enrichi en méthane (13) et la transférer à une deuxième entrée (74) de la deuxième unité d'épuration (7), et **en ce que** la conduite de dérivation peut comprendre un dispositif de détente (8).

6. Installation (1) selon l'une quelconque des revendications 1 à 5, **caractérisée en ce que** la première unité d'épuration (3) comprend un premier (310) et un deuxième (320) étage de séparation membranaire en série, et **en ce que** l'ensemble de conduites comprend une conduite configurée pour relier une sortie du premier étage (310) de séparation membranaire à une entrée du deuxième étage (320) de séparation membranaire, l'installation comprenant un deuxième système d'échange de chaleur (9) configuré pour mettre en échange thermique au moins une portion de la conduite avec la source froide (6).

7. Installation (1) selon l'une quelconque des revendications 1 à 6, **caractérisée en ce qu'**elle comprend une colonne de distillation (100) et **en ce que** l'ensemble de conduites est configuré pour transférer le courant gazeux enrichi en dioxyde de carbone (12) d'une deuxième sortie (33) de la première unité d'épuration (3) à une entrée de la colonne de distillation (100) afin de produire du dioxyde de carbone liquéfié.

8. Installation selon la revendication 7, **caractérisée en ce que** l'ensemble de conduites comprend une conduite reliant une première sortie supérieure de la colonne de distillation (100) à l'entrée (31) de la première unité d'épuration (3) pour transférer au moins une fraction d'un courant gazeux de tête de la colonne de distillation (100) à la première unité d'épuration (3).

9. Installation selon la revendication 8, **caractérisée en ce qu'**elle comprend un troisième système d'échange de chaleur (110) configuré pour refroidir le courant gazeux de tête de la colonne de distillation (100).

10. Installation (1) selon l'une quelconque des revendications 1 à 9, **caractérisée en ce qu'**elle comprend un dispositif de liquéfaction (200) et **en ce que** l'ensemble de conduites est configuré pour transférer le deuxième courant gazeux enrichi en méthane (13) de la deuxième unité d'épuration (7) à une entrée du dispositif de liquéfaction (200) afin de liquéfier le deuxième courant gazeux enrichi en méthane (13).

11. Installation selon la revendication 10, **caractérisée en ce qu'**elle comprend un quatrième système d'échange de chaleur (210) configuré pour refroidir le deuxième courant gazeux enrichi en méthane (13) avant son entrée dans le dispositif de liquéfaction (200).

12. Installation selon l'une quelconque des revendications 9 ou 11, **caractérisée en ce que** deux au moins des premier (4, 5), deuxième (9), troisième (110) et quatrième (210) systèmes d'échange de chaleur sont en échange thermique avec la même source froide (6).

13. Procédé de traitement d'un courant gazeux (10), notamment de biogaz, comprenant du méthane et du dioxyde de carbone, le procédé comprenant les étapes suivantes:
- comprimer le courant gazeux (10) à une pression comprise entre 1 et 22 barg, de préférence entre 7 et 20 barg, de préférence entre 12 et 16 barg,
- séparer le courant gazeux (10) comprimé en un premier courant gazeux enrichi en méthane (11) et un courant gazeux enrichi en dioxyde de carbone (12),
- refroidir le premier courant gazeux enrichi en méthane (11) à une température comprise entre -10 et -50 °C, de préférence entre -20 et -30 °C,
- séparer le premier courant gazeux enrichi en méthane (11) en un deuxième courant gazeux enrichi en méthane (13) et un courant gazeux appauvri en méthane (14),
**caractérisé en ce que** le premier courant gazeux enrichi en méthane (11) contient moins de 3% de dioxyde de carbone, et le deuxième courant gazeux enrichi en méthane (13) contient moins de 400 ppm de dioxyde de carbone, de préférence moins de 50 ppm de dioxyde de carbone.

14. Procédé selon la revendication 13, **caractérisé en ce qu'**il comprend une étape supplémentaire de mettre en échange thermique le courant gazeux appauvri en méthane (14) avec le premier courant gazeux enrichi en méthane (11).

15. Procédé selon l'une quelconque des revendications 13 ou 14, **caractérisé en ce que** l'étape de séparer le premier courant gazeux enrichi en méthane (13) est réalisée par une unité de séparation membranaire (7), et **en ce que** le procédé comprend les étapes supplémentaires suivantes:
- prélever une fraction du deuxième courant gazeux enrichi en méthane (13),
- détendre la fraction du deuxième courant gazeux enrichi en méthane (13),
- injecter la fraction du deuxième courant gazeux enrichi en méthane (13) dans l'unité de séparation membranaire (7).

16. Procédé selon l'une quelconque des revendications 13 à 15, **caractérisé en ce qu'**il comprend au moins l'une des étapes supplémentaires suivantes:
- liquéfier le courant gazeux enrichi en dioxyde de carbone (12), et/ou
- liquéfier le deuxième courant gazeux enrichi en méthane (13) .
